# EUROPEAN PATENT SPECIFICATION

(11) **EP 0 843 963 B1**
(45) Date of publication and mention of the grant of the patent: **11.12.2002**
(21) Application number: 97120576.0
(22) Date of filing: 24.11.1997
(51) Int. Cl.: A01N 25/10, C08G 63/16

(54) **Pesticide formulation for controlled release**
Pestizidformulierung mit kontrollierter Freisetzung
Formulations pesticides à libération contrôlée

(30) Priority: 26.11.1996 KR 9657351
(43) Date of publication of application: 27.05.1998
(73) Proprietor: SK CHEMICALS, Kyunggi-do (KR); Republic of Korea represented by Rural Development Administration, Suwon-city 441-100, Kyunggi-do (KR)
(72) Inventor: Kim, Hyo-Yeul, Suwon-si, Kyunggi-do (KR); Yoon, Kun-Sang, Secho-gu, Seoul (KR); Ku, Bon-Cheol, Yusung-gu, Daejeon (KR); Baek, Sung-Ho, Changan-gu, Suwon-si, Kyunggi-do (KR); Oh, Byung-Youl, Suwon-si, Kyunggi-do (KR); Park, Seung-Soon, Gweonsun-gu, Suwon-si, Kyunggi-do (KR); Kim, Young-Koo, Suwon-si, Kyunggi-do (KR); Oh, Kyeong-Seok, Paldal-gu, Suwon-si, Kyunggi-do (KR)
(74) Representative: Viering, Jentschura & Partner

(56) References cited:
- EP-A- 0 050 784
- EP-A- 0 542 081
- DE-A- 4 432 126
- US-A- 3 850 862
- PATENT ABSTRACTS OF JAPAN vol. 096, no. 008, 30 August 1996 & JP 08 092006 A (SHOWA DENKO KK;SHOWA HIGHPOLYMER CO LTD), 9 April 1996,

## Description

### BACKGROUND OF THE INVENTION

The present invention relates to a pesticide formulation for controlled release, and in particular to such a formulation which will provide the controlled release of pesticidal active ingredient in effective amounts over a prolonged period of time by including pesticide into a biodegradable aliphatic polyester resin.

Usually, in order to get a pesticidal effect such as prevention of breeding and extermination of main pest of nursery, it is required to use pesticide in excessive amounts at several times. But, distributed a large amount of pesticide causes problems such as a bad influence on the other plant, a damage of pesticide user/plant demander's health, a serious environmental pollution, complexity of work to distribute the pesticide and need for the excessive labor.

Conventionally, many efforts have been made to solve these problems. For example, Japanese Patent Laying-Open Publication No. H6-116103 describes the manufacture of pesticide that biodegradable aliphatic polyester resin is extruded in the form of plate, following by including pesticide dissolved in solvent into the resin plate. Japanese Patent Laying-Open Publication No. H5-85902 describes a pesticide formulation produced by copolymerizing polyester together with raw pesticide and acid, dissolving the resulting polyester in chloroform. absorbing the polyester solution onto zeolite in needle form and evaporizing chloroform by heating it.

But, it is pointed that method for producing such prior pesticide is complicate, its production environment is hazardous due to solvent or acid as used and its production cost is expensive.

JP-A-08-092,006 discloses a biodegradable resin molded product containing a biologically active substance. The resin is produced by adding a biologically active agent such as a herbicide, an anti-fungal agent, an insecticide or a repellent to a biodegradable resin. The biologically active resin is preferably an aliphatic polyester resin produced by synthesizing a polyester prepolymer having relatively high molecular weight from a glycol and an aliphatic dibasic acid as main components and subsequently converting the prepolymer into a high polymer with a coupling agent. The molded product is capable of being easily wasted and has a property for slowly releasing physiologically active substances. The aliphatic polyester has a number average molecular weight of 5,000 to 10,000 or more and a melting point of at least 60°C . The coupling agent is selected from diisocyanate, oxazoline, a diepoxy compound or a carboxylic anhydride. The biologically active substances have a melting point of 70 to 80°C.

US-A-3,850,862 discloses a blend comprising biodegradable thermoplastic dialkanoyl polymers which are prepared by esterification technique using predetermined amounts of an aliphatic diol and an alkanedioic acid. The aliphatic glycol contains desirably from 2 to 8 carbon atoms and the alkanedioic acid contains desirably from 2 to 12 carbon atoms. Additional ingredients which can be included in the blend are plant nutrients, fertilizer, insecticides, pesticides, herbicides, and the like.

EP-A-0 542 081 discloses a container for active ingredients made of thermoplastic elastomers based on copolyesters wherein the active ingredients can be insecticides. Example C discloses a pesticide formulation with a mixing ratio of 92.5 weight% copolyester and 7.5 weight% pesticide (propoxur; an insecticide for flowers).

### SUMMARY OF THE INVENTION

Accordingly, it is an object of the present invention to provide a pesticide formulation which can be prepared by a simple and cheap production method and decrease damage due to abusing pesticide by being released in effective amounts and keeping pesticidal effect over a prolonged period of time by only one treatment.

As the result of our research to accomplish the above object. we have eventually found that if a pesticide formulation, which is produced in the form of needle or plate by compounding a pesticide and biodegradable aliphatic polyester resin which can be completely degraded in natural environment, is treated to the plant, a controlled pesticidal effect at only one treatment has been kept by being released gradually in effective amounts, with biodegradable aliphatic polyester resin being degraded gradually.

Therefore, the present invention provide a controlled release pesticide formulation characterized by being compounded with pesticide and biodegradable polyester resin.

### DESCRIPTION OF THE INVENTION

It have been known that a specific aliphatic polyester is degraded completely in natural environment. Up to now, many researches for aliphatic polyester have made all over the world (see, Journal of Macromol. SCI-Chem., A23(3), 1986, 393-409).

Preferred biodegradable aliphatic polyester used in this formulation is thermoplastic aliphatic polyester of the following general formula III having a number average molecular weight of 10,000 to 50,000, intrinsic viscosity of higher than 0.5 (measured at 30 °C using ortho-chlorophenol) and melting point of 60 °C to 120 °C, which is prepared by polymerization with more than one selected from the group consisting of dicarboxylic acid having the following formula I, C₁ - C₃ alkyl ester and anhydride of said dicarboxylic acid as an acidic monomer, and more than one of diol having the following formula II as a alcoholic monomer. 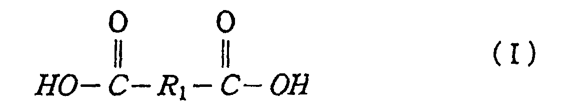 wherein, R₁ is substituted or non-substituted alkylene group with carbon number in the range of 0 to 30.

OH-R₂-OH (II)

wherein R₂ is substituted or non-substituted alkylene group with carbon number in the range of 2 to 20, 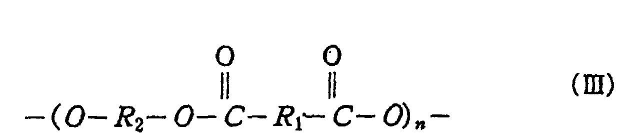 wherein n is a repeating unit.

If intrinsic viscosity of said biodegradable aliphatic polyester is lower than 0.5, degradation speed is so fast that the preaparation can not have a controlled release effect of pesticide and the processibility of formulation can be bad.

If the molecular weight is higher than 50,000, the degradation speed of polyester is unsuitable.

Also, if the melting point is lower than 60 °C, it is difficult to store and working ability is bad.

Therefore, the thermoplastic aliphatic polyester has a number average molecular weight of 10,000 to 50,000, intrinsic viscosity of higher than 0.5, melting point of 60 °C to 120 °C.

Preferred acidic monomer I forming the biodegradable aliphatic polyester III include more than one selected from the group consisting of dicarboxylic acid such as oxalic acid, malonic acid, succinic acid, glutaric acid, adipic acid, pimelic acid, suberic acid; alkyl ester of said dicarboxylic acid such as methylester, ethylester, propylester; and anhydride of said dicarboxylic acid. More prefered acidic monomer is more than one selected from the group consisting of succinic acid, adipic acid, methyl succinate, methyl adipate, succnic acid anhydride and adipic acid anhydride.

Prefered alcoholic monomer II forming the biodegradable aliphatic polyester III include more than one selected from the group consisting of ethylene glycol, propanediol, pentanediol, hexanediol, heptanediol and octanediol with substituted or non-substituted group. More prefered alcoholic monomer II is ethylene glycol, 1,4-butanediol or the mixture thereof. In case of substituted diol, it is prefered that the substituted group is alkyl group with lower carbon number and/or hydroxyl group.

According to the present invention, biodegradable aliphatic polyester may be also used one copolymerized with said monomers and a third ingredient such as polyethylene glycol having molecular weight of 100 to 9,000, isocyanate, multi-functional alcohol and/or multi-functional carboxylic acid.

In order to obtain the desired effects of the present pesticide formulation, pesticide to be compounded with biodegradable aliphatic polyester should be considered physico-chemical properties of active ingredient as follows.

As for physico-chemical characteristics, active ingredient should be in the powder form and as for chemical characteristics, melting point should be in the range of 50 to 150 °C. The pesticidal main ingredient should not degraded in the range of 100 to 200 °C. Also, in order to protect of loss of active ingredient by volatilization and safety of operator at preparation of product, vapor pressure should be lower than 1 mPa at 20 °C and solubility in water should be more than 50 mg/ℓ at 20 °C. The most important property is that the pesticidal main ingredient should be had a systemic compound. In order to be used at formulation of pesticide and biodegradable aliphatic polyester, the active ingredient should possess the said properties. Prefered pesticides have the above-mentioned characteristic are acephate, carbofuran and imidacloprid, for example.

The following explanation is the illustrative of method for compounding pesticide and biodegradable aliphatic polyester.

Firstly, biodegradable aliphatic polyester resin is selected with considering characteristics such as its physical properties and degradability and pesticide having said characteristics is selected. After selecting, it can be obtained in the form of pellet and plate by compounding them using single or twin screw extruder.

Even if temperature of cylinder suitable for compounding depends on the melting point of the pesticide, prefered cylinder temperature is in the ranges of 60 to 250°C. Usually, cylinder temperature is higher than 70 °C because of the viscous heating by the friction coefficient of the screw. Therefore, to use pesticide having melting point lower than 70 °C should be avoided. If not, there are troublesome problems such as degradation and carbonation.

The mixing ratio of aliphatic polyester resin to pesticide falls within the range of 50-99.9 : 50-0.1 by weight %, preferably 90-99 : 10-1 by weight %. If the mixing weight ratio of aliphatic polyester resin is less than 50 weight %, it makes compounding difficult and results in poor working performance. If the mixing weight ratio of the pesticide is less than 0.1 weight %, it decreases the effect of pesticide.

The invention will be more clearly understood with reference to the following examples.

In the following examples, the molecular weight of aliphatic polyester is measured by gelchromatography using chloroform as solvent and the melting point is measured by differential scanning calorimeter(DSC) with heating rate of 10 °C per minute, and the intrinsic viscosity of aliphatic polyester is measured at 30 °C using the ortho-chlorophenol.

### Example 1

98.6 g of aliphatic polyester having melting point of 113 °C, intrinsic viscosity of 1.2 and a number average molecular weight of 25,000 and 1.4 g of imidacloprid were mixed. The resulting mixture was passed through the twin screw-extruder at its cylinder temperature ranges of 120 to 150 °C. Sample in the form of stripe with 0.3 mm in thickness and 1.5 cm in width was prepared. Formulation efficiency are mentioned below.

### Example 2

The same procedure as described in Example 1, except that the shape of sample is in the form of rod with 1 mm in diameter. Formulation efficiency are mentioned below.

### Example 3

The same procedure as described in Example 1 was conducted except that aliphatic polyester resin has melting point of 91 °C, intrinsic viscosity of 1.5 and number average molecular weight of 31,000. Formulation efficiency are mentioned below.

### Example 4

The same procedure as described in Example 3 was conducted except that the shape of sample is in the form of rod with 1 mm in diameter. Formulation efficiency are mentioned below.

### Formulation efficiency of sample

1.5g of samples prepared by Example 1 to 4 were separately taken into 125 ml cap-stoppered Erlenmeyer flasks and 100 ml of acetonitrile : H₂O (1:1, v/v, pH 6.5) including 1000 ppm, dimethyl phthalate(DMP) as internal standard was added to each flask. After heated to 100°C for 5 minutes, the extract was cooled to the room temperature and the sample was reextracted with ultrasonicator for 5 minutes.

The extract obtained from the above procedure was analyzed with HPLC and formulation efficiency was determined on the basis of added value of active ingredient at the stage of formulation.

The results are shown in the Table 1.

**Table 1**

| Subject | Added value (%) | Analyzed value (%) | Formulation efficiency (%) |
|---|---|---|---|
| Example 1 | 1.52 | 1.37 | 90.1 |
| Example 2 | 1.52 | 1.42 | 93.4 |
| Example 3 | 1.52 | 1.38 | 90.8 |
| Example 4 | 1.52 | 1.34 | 88.2 |

### Stability of active ingredient in sample with the lapse of time of storage

Samples prepared by Example 1 to 4 were taken into aluminum package and was sealed. And then the packages were stored at 50 °C.

Degradation rate of active ingredient in sample were analyzed by the same method as the formulation efficiency with given days.

The results are shown in Table 2.

**Table 2**

| Subject | Degradation rates (%) of active ingredient after given days | | |
|---|---|---|---|
| | 30 days after | 60 days after | 90 days after |
| Example 1 | 0 | 0 | 0 |
| Example 2 | 0 | 0 | 0 |
| Example 3 | 0 | 0 | 0 |
| Example 4 | 0 | 0 | 0 |

### Biodegradation of aliphatic polyester resin in soil

A fixed amount of field soil was taken into plastic container with 3 cm in diameter and a slice of sample prepared in Example 1 to 4 was treated in each container. And then small amount of the soil was covered on the sample.

Soil moisture in each plastic container was adjusted to 60% of maximum water-holding capacity and the each plastic containers were kept at 50 °C for 7 months.

Biodegradation rates were measured by weight differences of samples with the lapse of time.

The results are shown in the Table 3.

**Table 3**

| subject | Biodegradation rates(%) of aliphatic polyester resin in soil after given months | | | |
|---|---|---|---|---|
| | 1 month | 3 months | 5 months | 7 months |
| Example 1 | 2.2 | 10.1 | 16.7 | 21.4 |
| Example 2 | 4.3 | 10.1 | 12.7 | 24.9 |
| Example 3 | 2.6 | 8.1 | 40.5 | 67.4 |
| Example 4 | 9.3 | 68 | 100 | - |

### Biodegradability of aliphatic polyester resin by microorganisms

Sample prepared by Example 2 was buried in soil. After 150 days, a fixed amount of sample and soil was gathered in the field. Microorganisms were isolated from the soil adhered to sample. Isolates obtained from the soil such as bacteria and fungi were inoculated on water agar media. After 3 days, two slices of sample prepared by Example 2 were treated in the medium. The medium were kept at 28 °C. The samples treated with bacteria and fungi were taken 60 days and 45 days, respectively.

Biodegradability of aliphatic polyester resin by microorganisms was determined by weight differences of resin.

The results are shown in the Table 4. Reference was not inoculated with isolates.

**Table 4**

| Subject | Bacteria | | Fungi | |
|---|---|---|---|---|
| | no. of bacteria | degradation rate, (%) | no. of isolates | degradation rate, (%) |
| Example 2 | 7 | 2.5 - 3.0 | 8 | 3.0 - 5.0 |
| | 31 | 3.1 - 3.5 | 10 | 5.1 - 10.0 |
| | 2 | 3.6 - 4.0 | 6 | 10.1 - 25.0 |
| Reference | - | 3.06 | - | 2.96 |

### Release rate of active ingredient from the sample into water

100 ml of distilled water was taken into 125 ml cap-stoppered test tube and the samples prepared by Example 1 to 4 were immersed in the water.

Released amounts of active ingredient from the sample into water were analyzed with HPLC with the lapse of time.

The results are shown in the Table 5.

**Table 5**

| Subject | Cumulative release rates (%) of active ingredient from the sample into water with lapse of day | | | | |
|---|---|---|---|---|---|
| | 1 day | 4 days | 9 days | 16 days | 25 days |
| Example 1 | 16.3 | 27.6 | 43.0 | 49.4 | 50.9 |
| Example 2 | 39.9 | 43.7 | 59.2 | 65.5 | 70.4 |
| Example 3 | 53.2 | 76.7 | 90.5 | 94.9 | 98.3 |
| Example 4 | 78.4 | 90.2 | 98.4 | 100 | - |

### Control effect of the sample on aphid

The samples were treated by buring them in the soil furrow of rose and chrysanthemum. Target insect pests were rose aphid. *Macrosiphum ibarae*, in rose, *Rosa hybrida*. and cotton aphid, *Myzus persicae*, in chrysanthemum, *Dendranthema grandiflorum*, under greenhouse.

After treatment, the control effects of the sample on the target insect pest were investigated with the lapse of time.

The control effects of the sample on aphid are shown in the Table 6, 7 and 8.

Materials and treatment conditions were as follows:

### [Rose]

· Variety : *Rosa hybrida var. Sonia*
· Insect : rose aphid (*Macrosiphum ibarae*)
· Pesticide application
   * For cut-flower
      - Samples prepared by Example 2 and 4 were buried in the soil around the roots at planting under greenhouse.
      - Samples prepared by Example 1 and 3 were treated in furrow at planting under greenhouse.
   * For pot-flower
      - Samples prepared by Example 2 and 4 were buried in the pot around the roots at planting under greenhouse.
      - Samples prepared by Example 1 and 3 were treated in seed furrow at planting under greenhouse.
· Investigation time
   * For cut-flower : The number of survived insect on the plant was counted 35, 64, 91, 183, and 205 days after treatment.
   * For pot-flower : The number of survived insect on the plant was counted 35, 64, 154, and 190 days after treatment.

### [Chrysanthemum]

· Variety : *Dendranthema grandiflorum*
· Insect : cotton aphid (*Myzus persicae*)
· Pesticide application same method as above was adopted.
· Investigation time : the number of the survived insect on the plant was counted 56, 70, 163, and 170 days after treatment.

**Table 6.**

| Control effects of sample on rose aphid, *Macrosiphum ibarae,* in *Rosa hybrida var. Sonia* for cut-flower under greenhouse | | | | | | |
|---|---|---|---|---|---|---|
| Subject | Mean percentage mortality of aphid on given days after treatment | | | | | |
| | 35 days | 64 days | 91 days | 183 days | 190 days | 205 days |
| Example 1 | 86.1 | 98.8 | 91.4 | 98.6 | 97.0 | 80.9 |
| Example 2 | 76.1 | 100.0 | 99.1 | 95.4 | 90.5 | 77.5 |
| Example 3 | 84.7 | 98.8 | 98.5 | 95.5 | 84.5 | 77.9 |
| Example 4 | 96.0 | 100.0 | 99.1 | 97.6 | 96.7 | 90.1 |
| Reference* (Acephate WP) | 76.4 | 99.4 | 94.1 | 96.2 | 94.4 | 98.1 |
| Untreated** | 93.3 | 571.7 | 413.0 | 96.0 | 93.8 | 209.0 |

| | | | | | | |
|---|---|---|---|---|---|---|
| * Reference formulation was applied 9 times during experiment. | | | | | | |
| ** The number of untreated plot designates total counted aphids in 10 leaves | | | | | | |

**Table 7.**

| Control effects of sample on rose aphid*, Macrosiphum ibarae,* in *Rosa hybrida var. Sonia* for pot-flower under greenhouse | | | | |
|---|---|---|---|---|
| Subject | Mean percentage mortality of aphid on given days after treatment | | | |
| | 35 days | 63 days | 154 days | 190 days |
| Example 1 | 100.0 | 99.1 | 97.6 | 100.0 |
| Example 2 | 98.6 | 95.5 | 100.0 | 100.0 |
| Example 3 | 87.9 | 87.4 | 98.8 | 95.1 |
| Example 4 | 99.7 | 97.3 | 100.0 | 98.6 |
| Reference* (Acephate WP) | 99.0 | 94.6 | 100.0 | 100.0 |
| Untreated** | 144.5 | 88.5 | 41.0 | 71.0 |

| | | | | |
|---|---|---|---|---|
| * Reference formulation was applied 8 times during experiment. | | | | |
| ** The number of untreated plot designates total counted aphids in 10 leaves | | | | |

**Table 8.**

| Control effects of sample on cotton apid, *Myzus persicae,* in *Dendranthema grandiflorum* under greenhouse | | | | |
|---|---|---|---|---|
| Subject | Mean percentage mortality of aphid on given days after treatment | | | |
| | 56 days | 70 days | 163 days | 170 days |
| Example 1 | 87.4 | 99.2 | 82.6 | 96.9 |
| Example 2 | 100.0 | 99.2 | 89.5 | 92.4 |
| Example 3 | 77.7 | 93.8 | 84.2 | 83.4 |
| Example 4 | 100.0 | 99.6 | 93.2 | 94.2 |
| Reference* (Acephate WP) | - | 76.2 | 77.4 | 89.7 |
| Untreated** | 10.3 | 85.3 | 19.0 | 22.0 |

| | | | | |
|---|---|---|---|---|
| * Reference formulation was applied 8 times during experiment. | | | | |
| ** The number of untreated plot designates total counted aphids in 10 leaves | | | | |

From the above test results, it can be seen the following facts. The amounts of active ingredient recovered from the formulations were over 90%. Degradation rates of active ingredient in stripe and rod type formulation after 90 days storage at 50 °C were not degraded. Biodegradability of aliphatic polyester resin in the sample by bacteria isolated from soil couldn't be observed, but six kinds of fungi among isolates were able to degrade 10.1-25.0% of sample. Therefore, biodegradability of aliphatic polyester resin by fungi is shown more excellent than bacteria. On the other hand, biodegradation rates of aliphatic polyester resin in the rod type in soli on 5 months after treatment is shown 100%. Efficacy of Example 1 to 4 on rose aphid and cotton aphid was maintained over 90% even 180 days after treatment under greenhouse.

As described above, this pesticide formulation provides pesticidal effect for controlled release by releasing active ingredient gradually and by degrading aliphatic polyester resin. Conventional pesticide formulations have been suffered from the various shortcomings: a possible contamination of pesticides by excess application, intoxication by spraying of diluted pesticide solution, and complexity of pesticide application job. In order to approach the environmentally sound agriculture and minimize harmful side effects of pesticides, development of this formulation is able to be reduction of pesticide input and application frequencies. Furthermore, aliphatic polyester resin in this formulation can be induced to a complete degradation in soil after all.

## Claims

1. A pesticide formulation for controlled release of active ingredient which pesticide is compounded with biodegradable thermoplastic aliphatic polyester, wherein
(a) said polyester is thermoplastic aliphatic polyester having a number average molecular weight of 10,000 to 50,000, intrinsic viscosity of higher than 0.5 (measured at 30°C using ortho-chlorophenol) and melting point of 60°C to 120°C;
(b) said pesticide satisfies all of the following properties: the pesticidal main ingredient having a systemic compound, vapour pressure being lower than 1mPa at 20°C, solubility in water being more than 50 mg/l at 20°C, melting point being 50 to 150°C, the pesticidal main ingredient being not degraded within temperature range of 100 to 200°C, and the active ingredient is in the powder form; and
(c) the mixing ratio of said polyester resin to said pesticide falls within the range of 50-99.9 : 50-0.1 by weight %.

2. A pesticide formulation according to claim 1, wherein said polyester is thermoplastic aliphatic polyester of the following general formular III having a number average molecular weight of 10,000 to 50,000, intrinsic viscosity of higher than 0.5 (measured at 30 °C using ortho-chlorophenol) and melting point of 60 °C to 120 °C. 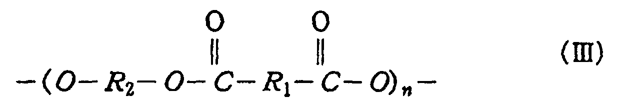 wherein n is repeated unit,
the thermoplastic aliphatic polyester is prepared by polymerization with more than one selected from the group consisting of dicarboxylic acid having the following formular I, C₁ - C₃ alkyl ester and anhydride of the dicarboxylic acid as an acidic monomer, 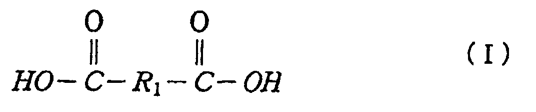 wherein, R₁ is substituted or non-substituted alkylene group with carbon number in the range of 0 to 30.
and more than one of diol having the following formular II as a alcoholic monomer.
OH-R₂-OH (II)
wherein R₂ is substituted or non-substituted alkylene group with carbon number in the range of 2 to 20.

3. A pesticide formulation according to claim 2, wherein said polyester is copolymer of said monomers and a third ingredient selected from a group consist of polyethylene glycol having molecular weight of 100 to 9,000, isocyanate, multi-functional alcohol, multi-functional carboxylic acid and the mixture thereof.

4. A pesticide formulation according to claim 1, wherein said pesticide is an insecticide.

5. A pesticide formulation according to claim 4, wherein said pesticide is an insecticide for flower.

6. A pesticide formulation according to claim 1, wherein said pesticide has melting point of 50 to 150 °C and is not degraded within temperature range of 100 to 200 °C.

7. A pesticide formulation according to claim 4, wherein said pesticide has melting point of 50 to 150 °C and is not degraded within temperature range of 100 to 200 °C.

8. A pesticide formulation according to claim 5, wherein said pesticide has melting point of 50 to 150 °C and is not degraded within temperature range of 100 to 200 °C.

9. A pesticide formulation according to claim 1, wherein said pesticide is acephate, carbofuran, diazinon, imidacloprid or propoxur.

10. A pesticide formulation according to claim 1, wherein the mixing ratio of the aliphatic polyester resin to pesticide is 50-99.9 : 50-0.1 by weight %.

11. A process for the production of the pesticide formulation of claim 1, which comprises compounding with biodegradable thermoplastic polyester resin and pesticide in an extruder at its cylinder temperature range of 60 - 250°C.

## Patentansprüche

1. Pestizidformulierung für die kontrollierte Abgabe eines aktiven Bestandteils, in der das Pestizid mit einem biologisch abbaubaren, thermoplastischen, aliphatischen Polyester gemischt ist, wobei
(a) der Polyester ein thermoplastischer aliphatischer Polyester ist, der ein zahlenmittleres Molekulargewicht von 10.000 bis 50.000, eine intrinsische Viskosität größer als 0,5 (gemessen bei 30°C unter Verwendung von Ortho-Chlorphenol) und einen Schmelzpunkt von 60°C bis 120°C hat;
(b) das Pestizid alle folgenden Eigenschaften besitzt, wobei der pestizidische Hauptbestandteil eine systemische Verbindung hat, der Dampfdruck niedriger als 1 mPa bei 20°C ist, in Wasser die Löslichkeit größer als 50 mg/l bei 20°C ist, der Schmelzpunkt von 50 bis 150°C liegt, der pestizidische Hauptbestandteil innerhalb eines Temperaturbereiches von 100 bis 200°C nicht abgebaut und der aktive Bestandteil in der Pulverform vorliegt; und
(c) das Mischungsverhältnis des Polyesterharzes zu dem Pestizid im Bereich von 50-99,9 : 50-0,1 Gew.% liegt.

2. Pestizidformulierung nach Anspruch 1, wobei das Polyester ein thermoplastisches aliphatisches Polyester der folgenden allgemeinen Formel III ist, mit einem zahlenmittleren Molekulargewicht von 10.000 bis 50.000, einer intrinsischen Viskosität mehr als 0,5 (gemessen bei 30°C unter Verwendung von Ortho-Chlorphenol) und einem Schmelzpunkt von 60°C bis 120°C, 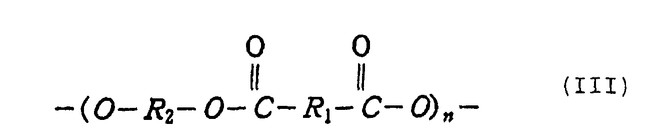 wobei n eine sich wiederholende Einheit ist,
wobei der thermoplastische aliphatische Polyester durch Polymerisation mit mehr als einem ausgewählt aus der Gruppe, bestehend aus Dicarbonsäure mit der folgenden Formel I, C₁-C₃ Alkylester und Anhydride der Dicarbonsäure als einem sauren Monomer, 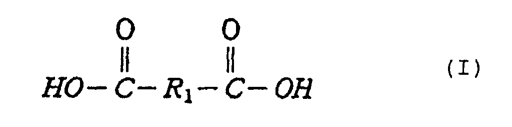 wobei R₁ eine substituierte oder unsubstituierte AlkylenGruppe mit einer Kohlenstoffzahl im Bereich von 0 bis 30 ist,
und mehr als einem Diol mit der folgenden Formel II als einem alkoholischen Monomer,
HO-R₂-OH (II)
wobei R₂ eine substituierte oder unsubstituierte AlkylenGruppe mit einer Kohlenstoffzahl im Bereich von 2 bis 20 ist, hergestellt wird.

3. Pestizidformulierung nach Anspruch 2, wobei der Polyester ein Copolymer der Monomere und eines dritten Bestandteils, ausgewählt aus der Gruppe, bestehend aus Polyethylenglycol mit einem Molekulargewicht von 100 bis 9.000, Isocyanat, multi-funktionellem Alkohol, mehrfach carboxylierter Säure und einer Mischung davon, ist.

4. Eine Pestizidformulierung nach Anspruch 1, wobei das Pestizid ein Insektizid ist.

5. Pestizidformulierung nach Anspruch 4, wobei das Pestizid ein Insektizid für Pflanzen ist.

6. Pestizidformulierung nach Anspruch 1, wobei das Pestizid einen Schmelzpunkt von 50 bis 150°C hat und in einem Temperaturbereich von 100 bis 200°C nicht abgebaut wird.

7. Pestizidformulierung nach Anspruch 4, wobei das Pestizid einen Schmelzpunkt von 50 bis 150°C hat und in einem Temperaturbereich von 100 bis 200°C nicht abgebaut wird.

8. Pestizidformulierung nach Anspruch 5, wobei das Pestizid einen Schmelzpunkt von 50 bis 150°C hat und in einem Temperaturbereich von 100 bis 200°C nicht abgebaut wird.

9. Pestizidformulierung nach Anspruch 1, wobei das Pestizid Acephat, Carbofuran, Diazinon, Imidacloprid oder Propoxur ist.

10. Pestizidformulierung nach Anspruch 1, wobei das Mischungsverhältnis des aliphatischen Polyesterharzes zum Pestizid 50-99,9 : 50-0,1 Gew.% ist.

11. Ein Verfahren zur Herstellung der Pestizidformulierung nach Anspruch 1, welches das Vermischen des biologisch abbaubaren thermoplastischen Polyesterharzes und des Pestizids in einem Extruder bei einer Zylindertemperatur im Bereich von 60-250°C umfasst.

## Revendications

1. Une formulation de pesticide pour une libération contrôlée d'un ingrédient actif, le pesticide étant combiné avec un polyester aliphatique thermoplastique biodégradable, dans laquelle:
(a) ledit polyester est un polyester aliphatique thermoplastique biodégradable ayant une masse moléculaire moyenne en nombre comprise entre 10000 et 50000, une viscosité intrinsèque supérieure à 0,5 (mesurée à 30°C en utilisant l'ortho-chlorophénol) et un point de fusion compris entre 60°C et 120°C;
(b) ledit pesticide satisfait toutes les propriétés suivantes: l'ingrédient principal du pesticide ayant un composé systémique, la pression de vapeur étant inférieure à 1mPa à 20°C, la solubilité dans l'eau supérieure à 50mg/l à 20°C, le point de fusion compris entre 50 et 150°C, l'ingrédient principal du pesticide n'étant pas dégradé dans une gamme de température comprise entre 100 et 200°C, et l'ingrédient actif est sous la forme de poudre; et
(c) le rapport de mélange de ladite résine de polyester audit pesticide se situe dans la gamme de 50-99,9:50-0,1 en pourcentage pondéral.

2. Une formulation de pesticide selon la revendication 1, dans laquelle ledit polyester est un polyester aliphatique thermoplastique de la formule générale III suivante ayant une masse moléculaire moyenne en nombre, comprise entre 10000 et 50000, une viscosité intrinsèque supérieure à 0,5 (mesurée à 30°C en utilisant l'ortho-chlorophénol) et un point de fusion compris entre 60°C et 120°C 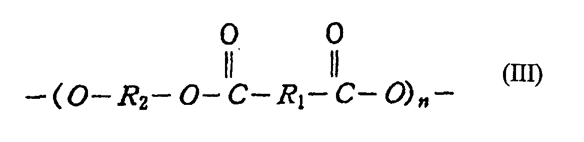 dans laquelle n est une unité répétée.
le polyester aliphatique thermoplastique est préparé par polymérisation avec plus d'un substituant choisi parmi le groupe consistant en acide dicarboxylique ayant la formule I suivante, ester d'alkyle en C₁ à C₃ et anhydride d'acide dicarboxylique en tant que monomère acide, 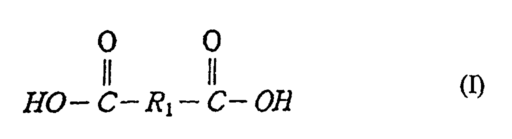 dans laquelle, R₁ est un groupe alkylène substitué ou non-substitué ayant un nombre d'atomes de carbone compris entre 0 et 30,
et plus d'un diol ayant la formule II suivante en tant que monomère alcoolique.
OH-R₂-OH (II)
dans laquelle R₂ est un groupe alkylène substitué ou non-substitué ayant un nombre d'atomes de carbone compris entre 2 et 20.

3. Une formulation de pesticide selon la revendication 2, dans laquelle ledit polyester est un copolymère desdits monomères et d'un troisième ingrédient choisi parmi un groupe consistant en polyéthylène glycol ayant un poids moléculaire compris entre 100 et 9000, isocyanate, alcool multi-fonctionnel, un acide carboxylique multi-fonctionnel et le mélange de ceux-ci.

4. Une formulation de pesticide selon la revendication 1, dans laquelle ledit pesticide est un insecticide.

5. Une formulation de pesticide selon la revendication 4, dans laquelle ledit pesticide est un insecticide pour plantes.

6. Une formulation de pesticide selon la revendication 1, dans laquelle ledit pesticide présente un point de fusion entre 50 et 150°C et n'est pas dégradé dans la gamme de température comprise entre 100°C et 200°C.

7. Une formulation de pesticide selon la revendication 4, dans laquelle ledit pesticide présente un point de fusion entre 50 et 150°C et n'est pas dégradé dans la gamme de température comprise entre 100°C et 200°C.

8. Une formulation de pesticide selon la revendication 5, dans laquelle ledit pesticide présente un point de fusion entre 50 et 150°C et n'est pas dégradé dans la gamme de température comprise entre 100°C et 200°C.

9. Une formulation de pesticide selon la revendication 1, dans laquelle ledit pesticide est acéphate, carbofurane, diazinon, imidacloprid, ou propoxur.

10. Une formulation de pesticide selon la revendication 1, dans laquelle le rapport du mélange de la résine de polyester aliphatique au pesticide se situe dans la gamme de 50-99,9:50-0,1 en pourcentage pondéral.

11. Un procédé pour produire la formulation de pesticide selon la revendication 1, qui comprend la combinaison avec une résine de polyester thermoplastique biodégradable et un pesticide dans une extrudeuse à une température de son cylindre comprise entre 60 et 250°C.
